# EUROPÄISCHE PATENTSCHRIFT

(11) **EP 3 108 568 B1**
(45) Veröffentlichungstag und Bekanntmachung des Hinweises auf die Patenterteilung: **06.12.2017**
(21) Anmeldenummer: 15704206.0
(22) Anmeldetag: 03.02.2015
(51) Int. Cl.: H02J 13/00, H01R 13/66

(54) **MODUL ZUR FERN-STEUERUNG, -AUSLESUNG UND/ODER -ÜBERWACHUNG ELEKTRISCHER GERÄTE**
MODULE FOR REMOTE CONTROLLING, READING, AND/OR MONITORING ELECTRIC DEVICES
MODULE DE COMMANDE, RELEVÉ ET/OU SURVEILLANCE À DISTANCE D'APPAREILS ÉLECTRIQUES

(30) Priorität: 20.02.2014 DE 102014002327
(43) Veröffentlichungstag der Anmeldung: 28.12.2016
(73) Patentinhaber: Diehl Stiftung & Co. KG, 90478 Nürnberg (DE)
(72) Erfinder: GLASMACHER, Mathias, 68799 Reilingen (DE)
(74) Vertreter: Diehl Patentabteilung
(86) Internationale Anmeldenummer: PCT/EP2015/000195
(87) Internationale Veröffentlichungsnummer: WO 2015/124261

(56) Entgegenhaltungen:
- JP-A- 2008 270 075
- US-A1- 2012 212 349
- US-A1- 2013 183 851

## Beschreibung

Die Erfindung betrifft ein Modul gemäß dem Oberbegriff des Hauptanspruches.

Bei den Geräten kann es sich gleichermaßen um Leistungs-Verbraucher wie um (beispielsweise regenerative) Leistungsquellen handeln. Ein derartiges Modul ist etwa in quasiautarken Versorgungseinrichtungen auf Gemeindeebene nützlich, wenn kritische regionale Netzzustände auf die Normgegebenheiten zurückzuführen sind, indem auf den laufenden Betrieb von lokalen Geräten spezifischer Kategorien von einer regionalen Zentrale aus dezidiert Einfluss genommen wird. Verbraucher-Kategorien lassen sich dafür etwa hinsichtlich ihrer Funktionsempfindlichkeit gegen Belieferungsunterbrechungen, typisch auftretender Leistungsspitzen, Durchschnittsleistungsbedarfes oder Blindleistungsaufnahme voneinander unterscheiden. Unter Berücksichtigung des momentanen Betriebszustandes der einzelnen Verbraucher kann dann ein momentan kritischer regionaler Netzzustand durch gezieltes Eingreifen in Form etwa von Abschalten oder Begrenzen der lokalen Versorgung von Elektroheizungen beziehungsweise durch Beeinflussung des Leistungsfaktors bei Elektroantrieben, aber auch etwa durch Fernkorrektur der Netzeinspeisefrequenz einer statischen oder dynamischen Leistungsquelle, regional leichter zurückgeführt werden, als ein Bedarfsausgleich aus einem Fernnetzverbund. Auch lässt sich über derartige Module die Fernsteuerung und Fernabfrage von Geräten wie etwa einer Klimaanlage beziehungsweise von Temperatur-, Feuchte- oder Bewegungsmeldern realisieren. Beispielsweise in der DE 10 2009 050 170 B4 ist ein derartiges zur Gebäudeautomatisierung ausgelegtes, dort sogar über mehrere hierarchische Ebenen strukturiertes, System näher beschrieben.

Notwendig ist allerdings eine in der Regel bidirektionale Datenverbindung zur Übermittlung von Soll- und Ist-Zuständen zwischen einer regionalen Zentrale und den lokalen, durch Adressen etwa nach dem IPV6-Standard (mit optionalem Endgeräte-Informationsanhang) individualisierten Geräten. Dieser Datenverkehr kann grundsätzlich über die Netzkabel der Geräte (PowerLineCommunication) erfolgen. Der Datenverkehr erfolgt in der Praxis aber eher über Funk mittels in der Zentrale und in den Geräten betriebener, netzgespeister Transceiver. Wenn ein Gerät nicht mit einem Modul ausgestattet ist, das eine solche Sende-Empfangs-Einrichtung samt Datenaufbereitungsschaltungen aufweist, was noch auf absehbare Zeit die Regel sein wird, dann kann ein handelsüblicher, mit derartigem Modul bestückter Zwischenstecker zwischen der Netzsteckdose und dem Netzstecker am Anschlusskabel des Gerätes eingesetzt werden, wie er z. B. aus der US 2013/0183851 A1 oder der JP 2008/270075 A bekannt ist. In dem Zwischenstecker werden dann insbesondere Spannung, Strom und Leistungsfaktor, sowie gegebenenfalls Umweltparameter wie Feuchte, Luftdruck, Temperatur, Helligkeit oder Schall, gemessen und per Funk an die Zentrale übermittelt. Verfügbare Zwischenstecker ermöglichen allerdings oft nur eine unidirektionale Kommunikationsverbindung zu oder von einer übergeordneten Instanz. Außerdem ist die dadurch zusätzlich auftretende Steckkontakt-Paarung in elektromechanischer Hinsicht funktionskritisch.

Wenn eine übergeordnete Zentrale etwa im selben Gebäude wie die fraglichen Geräte betrieben wird, ist eine Datenübertragung vom Modul über die Leitungen des Hausnetzes der Stromversorgung (PLC) sinnvoll; ebenso wie gegebenenfalls zur Datenübertragung an das diesem Modul zugeordnete Gerät oder an andere Geräte dieses lokalen Versorgungsnetzes. Dazu können mit gezielt gewählten Frequenzen und Modulationen die Netzfilter der Geräte überwunden und generell Kollisionen mit geräteeigenen EMV-Schutzmaßnahmen vermieden werden. Jedenfalls der Datenaustausch mit einer extern betriebenen Zentrale erfolgt aber vorteilhafter über Funk.

Um auf den Betriebszustand des Gerätes Einfluss nehmen zu können, enthält das Modul zusätzlich zum Transceiver mit seiner Datenaufbereitung auch ein fernsteuerbares Leistungs-Stellglied zum Beeinflussen der Stromaufnahme des nachfolgenden Gerätes; wenn solch ein Stellglied nicht im Gerät verwirklicht und dort vom Modul her, vorzugsweise über das Speisekabel, ansteuerbar ist.

Allerdings ist dadurch in der Zentrale nur der Zwischenstecker identifiziert, nicht das eigentlich interessierende Gerät. Das kann unbemerkt durch ein anderes hier angeschlossenes Gerät mit ganz anderen Betriebsparametern ersetzt worden sein, so dass ein Eingriff in dessen Betrieb seitens der Zentrale gar nicht wirksam wird, oder womöglich mehr schadet als nützt. Bei einer solchem Zwischenstecker nachgeschalteter mobiler Steckdosenleiste besteht schließlich gar keine steuerungstechnisch verwertbare Beziehung zu einem bestimmten von mehreren an die Leiste angesteckten Geräten mehr. Andererseits kann ein Nutzer den Zwischenstecker einfach abziehen, so dass die vermeintliche Automatisierung gleich ganz außer Funktion gesetzt ist. Im Übrigen ist ein derartiger Zwischenstecker schon wegen der erforderlichen Integration von Stift-Steckern und Buchsen-Dosen recht klobig; und somit nicht nur optisch unangenehm auffallend, sondern auch handhabungstechnisch störend, zumal wenn etwa durch den Raumbedarf des Zwischensteckers gleich mehrere einander beiderseits benachbarte Steckpositionen in einer Mehrfachsteckerleiste verdeckt werden.

In Erkenntnis solcher Gegebenheiten liegt vorliegender Erfindung die technische Problemstellung zugrunde, einen Modul gattungsgemäßer Art dahingehend auszulegen, dass er unter eindeutiger Gerätezuordnung flexibel und unproblematisch einsetzbar ist und durch Skalierungsmöglichkeiten eine preisgünstige Großserienproduktion eröffnet.

Diese Aufgabe ist erfindungsgemäß durch die im Hauptanspruch angegebenen wesentlichen Merkmale gelöst. Danach wird davon Gebrauch gemacht, dass Netzstecker von Geräten einen normneutralen Netzstecker-Grundkörper aufweisen können, der im Kunststoff-Spritzguss integral mit der Kabelisolierung eines Standard-Speisekabels gefertigt ist. Über dieses Netz- oder Speisekabel wird der Stecker-Grundkörper fest an ein Gerät angeschlossen. Erst wenn feststeht, wo das Gerät betrieben werden soll, wird der Grundkörper mit einem Normadapter mit einer Stiftgruppierung gemäß der dortigen Netzstecker-Norm bestückt.

In diesen Stecker-Grundkörper ist nun das vorstehend in seinen Grund- und Ausbaufunktionen umrissene Modul zur Fern-Steuerung und -Überwachung des fest an das Speisekabel angeschlossenen Gerätes eingebaut. Eine fertigungsseitig über das Modul an den Grundkörper vergebene Adresse individualisiert dadurch das über das Speisekabel an den Netzstecker-Grundkörper angeschlossene Gerät; dessen Betriebszustand so mittels des Modules gezielt fernübermittelbar und fernbeeinflussbar ist.

Für den Fall, dass etwa aus verschiedenen Produktionsserien stammende Adressen-Dubletten auftreten sollten, kann vorgesehen sein, wenigstens eine Position in der vorgegeben Adresse etwa durch externe Manipulation definiert zu ändern; z.B. durch mechanisches Eindrückern eines am Grundkörper markierten gummielastischen Bereiches oder durch definierte Magnetfeldbeaufschlagung des Moduls im Grundkörper.

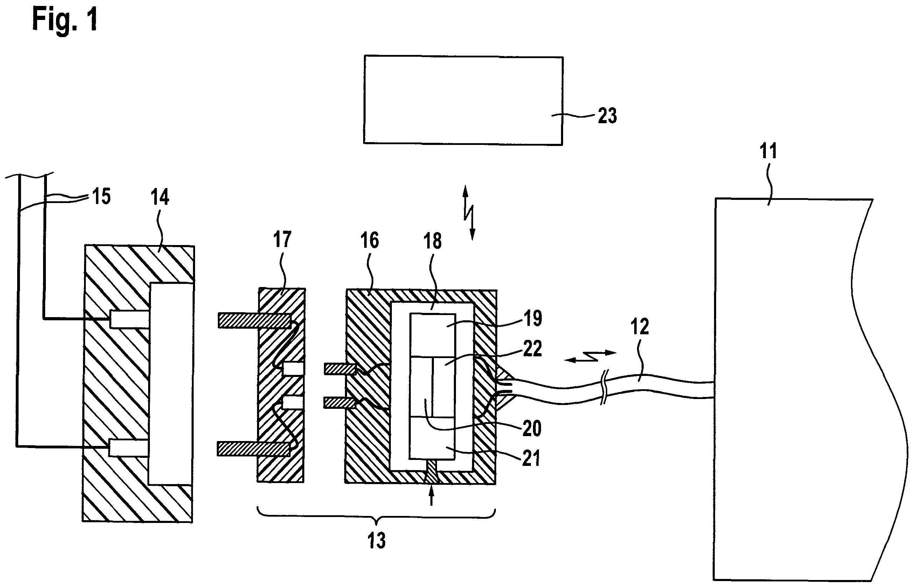

Zusätzliche Weiterbildungen und Alternativen im Rahmen der Erfindung ergeben sich aus den weiteren Ansprüchen und, auch hinsichtlich deren Vorteilen, aus nachstehender Beschreibung eines in der Zeichnung skizzierten bevorzugten Realisierungsbeispieles zur erfindungsgemäßen Lösung. Die einzige Figur der Zeichnung zeigt in unmaßstäblich auf das Funktionswesentliche abstrahiert skizzierter Darstellung einen mit integriertem Modul an ein Gerät angeschlossenen Netzstecker-Grundkörper mit Normadapter für eine Hausnetz-Steckdose.

Ein Gerät 11 ist zu seinem Betrieb über ein Speisekabel 12 mit dessem Netzstecker 13 an die Steckdose 14 eines Hausnetzes 15 anschließbar. Der Netzstecker 13 weist einen mit der Kabelisolierung des Speisekabels 12 integral gespritzten Grundkörper 16 auf, der mit einem stiftseitig zur Steckdose 14 passenden Normadapter 17 bestückbar ist. Weil diese Stecker-Anpassung über den Adapter 17 an die örtlichen Gegebenheiten einer genormte Steckdose 14 erst vor Ort erfolgt, kann ein Standard-Speisekabel 12 mit vorzugsweise angespritztem normneutralem Stecker-Grundkörper 16 in großer Serie und entsprechend preisgünstig produziert werden.

In den Netzstecker-Grundkörper 16 ist ein Modul 18 eingespritzt, der jedenfalls einen Transceiver 19 mit Datenaufbereitung 20 für Funk- und / oder Kabel-Datenübertragung aufweist. Eine Antenne (nicht gezeigt) kann im Modul 18 oder im Speisekabel 12 integriert oder auch durch letzteres selbst gebildet sein. Der in einem Adressenspeicher 21 abgespeicherte Datensatz individualisiert diesen Grundkörper 16 und damit auch das fest an sein Speisekabel 12 angeschlossene (oder auch zugeordnete, aber lösbar angeschlossene) Gerät 11. Dessen Betriebsweise ist über ein in miniaturisierter Leistungselektronik ausgelegtes Stellglied 22 beeinflussbar, das - wenn es nicht funk- oder leitungs-fernsteuerbar im Gerät 11 selbst installiert ist - ebenfalls im Modul 18 enthalten ist. Zusätzlich oder auch alternativ ist ein ebenfalls in miniaturisierter Leistungselektronik ausgeführtes Messmodul (nicht gezeigt) zur Leistungsmessung - insbesondere also Spannungs-, Strom- und Phasenmessung - im Modul 18 vorgesehen. Im übrigen steht das Gerät 11 über sein Modul 18 bidirektional mit einer, in der Regel abgesetzt betriebenen, Auslese-, Überwachungs- oder Steuerungs-Zentrale 23 in Datenaustausch-Verbindung. Diese kann über Funk bestehen, oder über das über die Steckdose 14 erreichbare Hausnetz 15. Somit können über die Zentrale 23 Messwerte ausgelesen, der Betrieb des Geräts 11 überwacht und/oder in den Betrieb des Geräts 11 steuernd eingegriffen werden.

Für den Fall, dass bei der Zentrale 23 Komplikationen auftreten, weil, etwa aus verschiedenen Fertigungszyklen stammend, eine bestimmte Adresse über die Grundkörper 16 zwei Geräten 11 gleichzeitig zugeordnet ist, ist in der Zeichnung symbolisch berücksichtigt, dass sich eine Adresse in ihrem Adressenspeicher 21 etwa durch mechanischen Eingriff am Grundkörper 16 ändern lässt.

Ein zwecks Fern-Steuerung und -Überwachung elektrischer Geräte 11 von einer Zentrale 23 aus mit einem Transceiver 19 für drahtlose und / oder drahtgebundene Kommunikation unter einem eingeführten Protokoll ausgestattetes Modul 18 ist also erfindungsgemäß weder im Gerät 11, noch in einem Zwischenstecker zwischen Steckdose 14 und Netzstecker 13, sondern in einem normneutralen Netzstecker-Grundkörper 16 am Speisekabel 13 zum Gerät 11 enthalten, der durch eine eingespeicherte Adresse individualisiert ist. Dadurch können standardisierte Speisekabel 12 mit integriertem Grundkörper 16 kostengünstig in Großserie und die Geräte 11 adressneutral produziert werden. Durch den Anschluss des Speisekabels 12 an das Gerät 11 wird dieses individualisiert; und für den spezifischen Einsatzort des Gerätes 11 wird der Grundkörper 16 mittels eines Steckstift-Normadapters 17 zum Netzstecker 13 für Anschluss an die dort vorgehaltene Norm-Steckdose 14 komplettiert.

### Bezugszeichenliste

- 11: Gerät
- 12: Speisekabel
- 13: Netzstecker
- 14: Steckdose
- 15: Hausnetz
- 16: Grundkörper
- 17: Normadapter
- 18: Modul
- 19: Transceiver
- 20: Datenaufbereitung
- 21: Adressspeicher
- 22: Stellglied
- 23: Zentrale

## Patentansprüche

1. Modul (18) mit einem Transceiver (19), zur Fern-Steuerung, -Auslesung und/oder -Überwachung elektrischer Geräte (11) von einer Zentrale (23) aus, **dadurch gekennzeichnet, dass** der Modul (18) in einem normneutralen, mit einem Netzstecker-Normadapter (17) bestückbaren Netzstecker-Grundkörper enthalten ist, der über ein Speisekabel (12) an das Gerät (11) anschließbar ist, wobei das Modul einen Adressspeicher (21) aufweist, in dem eine Identifikation zur Identifizierung des Grundkörpers eingespeichert ist.

2. Modul nach einem der vorangehenden Ansprüche, **dadurch gekennzeichnet, dass** er mit einem Transceiver (19) für Funk- und / oder Leitungsübertragung ausgestattet ist.

3. Modul nach einem der vorangehenden Ansprüche **dadurch gekennzeichnet, dass** die im Adressspeicher (21) abgelegte Identifikation des Grundkörpers (16) durch externe Einflussnahme auf den Grundkörper (16) änderbar ist.

4. Modul nach dem vorangehenden Anspruch, **dadurch gekennzeichnet, dass** der Adressspeicher (21) für Sensieren einer mechanischen, elektronischen oder magnetischen Beeinflussung ausgelegt ist.

5. Modul nach einem der vorangehenden Ansprüche, **dadurch gekennzeichnet, dass** er mit einem miniaturisierten elektronischen Leistungs-Messmodul und/oder -Stellglied (22) ausgestattet ist.

6. Modul nach einem der vorangehenden Ansprüche, **dadurch gekennzeichnet, dass** er für leitungsgebundene Fernsteuerung eines im Gerät (11) betriebenen Stellgliedes (22) und/oder Auslesen eines im Gerät (11) betriebenen Messmoduls ausgelegt ist.

7. Modul nach einem der vorangehenden Ansprüche, **dadurch gekennzeichnet, dass** es zu einer bevorzugt bidirektionalen Kommunikation mit dem Gerät (11) über das Speisekabel (12) und zu einer bevorzugt bidirektionalen Kommunikation mit der Zentrale (23) über Funk ausgebildet ist.

## Claims

1. Module (18) with a transceiver (19), for remotely controlling, reading, and/or monitoring electric devices (11) from a control center (23), **characterized in that** the module (18) is included in a standard-neutral power plug base body which can be equipped with a power plug standard adapter (17) and can be connected via a supply cable (12) to the device (11), wherein the module has an address memory (21) in which there is stored an identification for identifying the base body.

2. Module according to one of the preceding claims, **characterized in that** it is equipped with a transceiver (19) for radio and/or wired transmission.

3. Module according to one of the preceding claims, **characterized in that** the identification of the base body (16) stored in the address memory (21) may be changed via external exertion of influence on the base body (16).

4. Module according to the preceding claim, **characterized in that** the address memory (21) is designed for sensing a mechanical, electronic, or magnetic influence.

5. Module according to one of the preceding claims, **characterized in that** it is equipped with a miniaturized electronic power measurement module and/or control element (22).

6. Module according to one of the preceding claims, **characterized in that** it is designed for wired remote control of a control element (22) operated in the device (11) and/or reading a measurement module operated in the device (11).

7. Module according to one of the preceding claims, **characterized in that** it is designed for preferably bidirectional communication with the device (11) via the supply cable (12) and for preferably bidirectional communication with the control center (23) via radio.

## Revendications

1. Module (18) comprenant un émetteur-récepteur (19) servant à la commande à distance, au télérelevé et/ou à la télésurveillance d'appareils électriques (11) depuis une centrale (23), **caractérisé en ce que** le module (18) se trouve dans un corps de base de fiche secteur indépendant de toute norme, lequel peut être équipé d'un adaptateur normalisé de fiche secteur (17), lequel peut être raccordé à l'appareil (11) par le biais d'un câble d'alimentation (2), le module possédant une mémoire d'adresses (21) dans laquelle est mémorisée une identification servant à identifier le corps de base.

2. Module selon l'une des revendications précédentes, **caractérisé en ce qu'**il est équipé d'un émetteur-récepteur (19) pour une transmission radioélectrique et/ou filaire.

3. Module selon l'une des revendications précédentes, **caractérisé en ce que** l'identification du corps de base (16) stockée dans la mémoire d'adresses (21) peut être modifiée par une influence externe sur le corps de base (16).

4. Module selon l'une des revendications précédentes, **caractérisé en ce que** la mémoire d'adresses (21) est conçue pour la détection d'une influence mécanique, électronique ou magnétique.

5. Module selon l'une des revendications précédentes, **caractérisé en ce qu'**il est équipé d'un module de mesure et/ou d'un actionneur de puissance (22) électronique miniaturisé.

6. Module selon l'une des revendications précédentes, **caractérisé en ce qu'**il est conçu pour une télécommande filaire d'un actionneur (22) en fonctionnement dans l'appareil (11) et/ou le relevé d'un module de mesure en fonctionnement dans l'appareil (11).

7. Module selon l'une des revendications précédentes, **caractérisé en ce qu'**il est conçu pour une communication de préférence bidirectionnelle avec l'appareil (11) par le biais du câble d'alimentation (12) et pour une communication de préférence bidirectionnelle avec la centrale (23) par voie radioélectrique.
